# EUROPEAN PATENT SPECIFICATION

(11) **EP 3 488 708 B1**
(45) Date of publication and mention of the grant of the patent: **12.08.2020**
(21) Application number: 18198027.7
(22) Date of filing: 01.10.2018
(51) Int. Cl.: A23L 3/00, A23L 3/10, A23L 3/12, A23L 3/14, B65B 55/02

(54) **A RETORT AND A METHOD FOR TEMPERATURE TREATMENT OF PACKAGING CONTAINERS**
RETORTE UND VERFAHREN ZUR TEMPERATURBEHANDLUNG VON VERPACKUNGSBEHÄLTERN
CORNUE ET PROCÉDÉ DE TRAITEMENT THERMIQUE DE RÉCIPIENTS D'EMBALLAGE

(30) Priority: 23.11.2017 EP 17203289
(43) Date of publication of application: 29.05.2019
(73) Proprietor: Tetra Laval Holdings & Finance S.A., 1009 Pully (CH)
(72) Inventor: FUNKQUIST, Ola, 234 40 Lomma (SE)
(74) Representative: Tetra Pak - Patent Attorneys SE

(56) References cited:
- EP-A1- 2 377 560
- US-A- 5 849 246
- US-A1- 2005 226 094
- US-A1- 2007 280 044

## Description

### Technical Field

The present invention generally relates to the field of retort systems for in-container preservation of foodstuffs, i.e. to the field of temperature treatment of packaging containers for sterilization of the contents thereof. More particularly, the present invention relates to an apparatus in which packaging containers can be placed for temperature treatment thereof, i.e. a retort, and a related method for temperature treatment of packaging containers in such apparatus.

### Background

In order to extend the shelf life of a product, it is usual to heat-treat the product and its package. The selected level of heat-treatment depends on the conditions under which the intention is to store the product packed in the package, such as the intended shelf life, and other factors such as the type of food and the initial number of microorganisms in the package. A conventional method of carrying out shelf life-extending heat-treatment of a package and a food product filled into a package is pasteurization or sterilization in a so-called retort device. The packaging container is thus placed in a retort and heated therein with the aid of a circulating medium, e.g. hot steam, and/or water to a temperature which in general lies within the range of 70-130°C, and in some cases up to 150°C. After a predetermined stay time at this selected temperature, the packaging container is typically cooled with a circulating medium, for example cold water. The cooled packaging container is thereafter removed from the retort for further transport and handling. The retortable packaging containers can be produced with the aid of form and seal machines of the type which, from a web or from prefabricated blanks of the packaging material, form, fill and seal finished packages. The filled and sealed, container is thereafter ready for heat-treatment in order to impart to the packed food extended shelf life in the unopened packaging container. Some related prior art is described in patent documents US2007/280044A1, US5849246A, EP2377560A1 and US2005/226094A1.

It is desirable to improve the temperature treatment procedure so that the throughput of the process can be increased. I.e. the treatment process should not impede the efforts in the development of high-speed packaging systems. It is thus desirable to reduce the time of the temperature treatment procedure of packaging containers and also to improve the quality of the sterilization process. Hence, an improved retort for temperature treatment of packaging containers would be advantageous and in particular allowing for avoiding more of the above-mentioned problems and compromises, including providing for a more efficient temperature treatment procedure of packaging containers. A related method of temperature treatment would also be advantageous.

### Summary

Accordingly, examples of the present invention preferably seek to mitigate, alleviate or eliminate one or more deficiencies, disadvantages or issues in the art, such as the above-identified, singly or in any combination by providing a device according to the appended patent claims.

According to a first aspect a retort for temperature treatment of packaging containers is provided. The retort comprises a rack configured for receiving packaging containers for a stacked arrangement thereof, and an outlet for a temperature treatment medium. The outlet is arranged adjacent a center position of the rack whereby the temperature treatment medium can propagate from the outlet towards a periphery of the rack.

According to a second aspect a method for temperature treatment of packaging containers stacked in a rack is provided. The method comprises expelling a temperature treatment medium from an outlet arranged adjacent a center position of the rack for propagating the temperature treatment medium from the outlet towards a periphery of the rack.

For both aspects the outlet is omnidirectional for a circumferential and/or spherical distribution of temperature treatment medium through the rack and towards the periphery

Further examples of the invention are defined in the dependent claims, wherein features for the second aspect of the disclosure is as for the first aspect mutatis mutandis.

Some examples of the disclosure provide for a more efficient temperature treatment procedure of packaging containers.

Some examples of the disclosure provide for improving the quality of the heat treatment procedure.

Some examples of the disclosure provide for improving the quality of the contents of packaging containers being temperature treated.

Some examples of the disclosure provide for improved heat distribution inside a retort.

Some examples of the disclosure provide for reducing the time for temperature treatment of packaging containers.

Some examples of the disclosure provide for facilitating the propagation of a temperature treatment medium in a retort.

Some examples of the disclosure provide for increasing the number of packages for stacking inside a rack for heat treatment thereof.

Some examples of the disclosure provide for increasing the throughput in a heat treatment process of packaging containers.

The following examples are discussed in relation to racks as a holder in the retort but the scope of the invention is not limited to these since the skilled person is of course aware of other types of holders in a retort e.g. baskets with trays, a basket, a tray and so on.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

These and other aspects, features and advantages of which examples of the invention are capable of will be apparent and elucidated from the following description of examples of the present invention, reference being made to the accompanying drawings, in which;
Fig. 1 is a schematic illustration, in a front view, of a retort according to examples of the disclosure;
Fig. 2 is a schematic illustration, in a perspective view, of a retort according to examples of the disclosure;
Figs. 3a-b are schematic illustrations, in perspective views, of a detail of a retort according to examples of the disclosure;
Fig. 4a is a schematic illustration, in a perspective view, of a retort according to examples of the disclosure;
Figs. 4b is a schematic illustration, in a perspective view, of a detail of a retort according to examples of the disclosure;
Fig. 5 is a schematic illustration, in a top-down view, of a retort according to examples of the disclosure;
Fig. 6 is a schematic illustration, in a top-down view, of a retort according to examples of the disclosure;
Fig. 7 is a schematic illustration, in a top-down view, of a retort according to examples of the disclosure;
Fig. 8a is a flowchart of a method for temperature treatment of packaging containers stacked in a rack according to examples of the disclosure; and
Fig. 8b is a flowchart of a method for temperature treatment of packaging containers stacked in a rack according to examples of the disclosure.

### Detailed Description

Specific examples of the invention will now be described with reference to the accompanying drawings. This invention may, however, be embodied in many different forms and should not be construed as limited to the examples set forth herein; rather, these examples are provided so that this disclosure will be thorough and complete, and will fully convey the scope of the invention to those skilled in the art. The terminology used in the detailed description of the examples illustrated in the accompanying drawings is not intended to be limiting of the invention. In the drawings, like numbers refer to like elements.

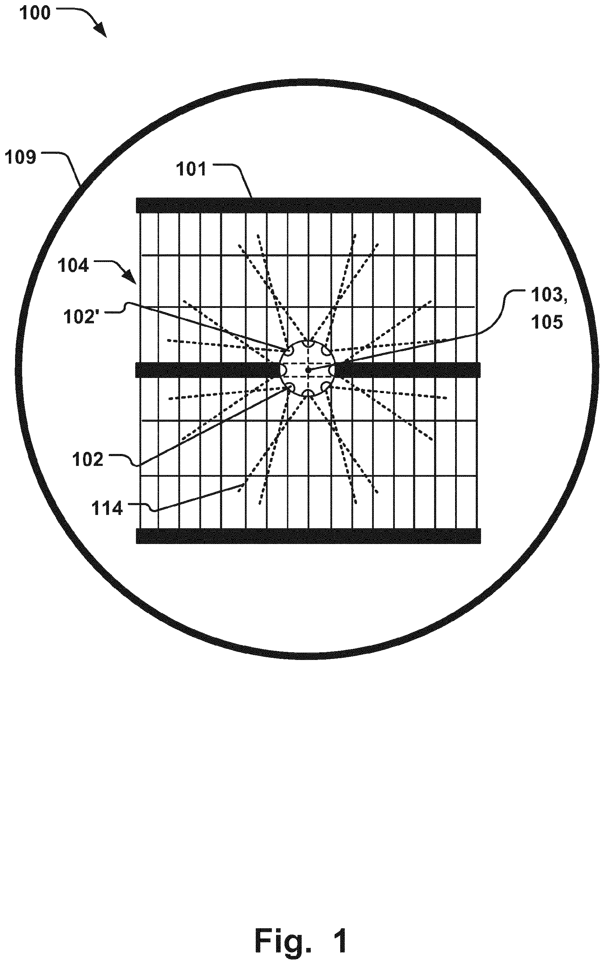

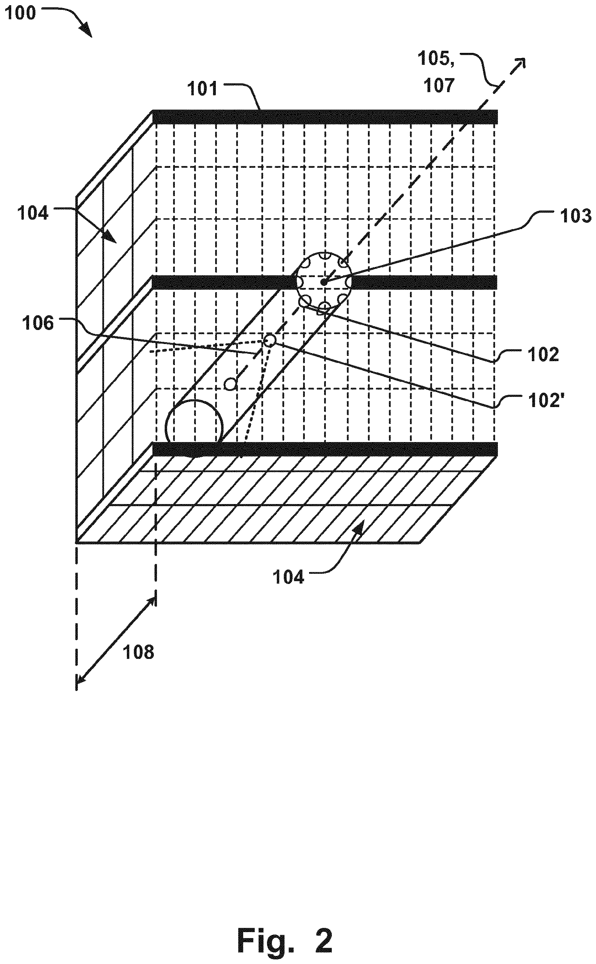

Fig. 1 is a schematic illustration, in a front view, of a retort 100 for temperature treatment of packaging containers (not shown). The retort 100 comprises a rack 101 or crate configured for receiving packaging containers for a stacked arrangement thereof. I.e. the packaging containers can be arranged in the different planes of the rack 101 and in associated rows and columns thereof with a defined spacing. The retort comprises an outlet 102 for a temperature treatment medium. The outlet 102 is arranged adjacent a center position 103 of the rack 101. The temperature treatment medium can thereby propagate from the outlet 102, i.e. from a position adjacent the center position 103 of the rack 101, towards a periphery 104 of the rack 101. The periphery 104 of the rack should be construed as the outer borders of the rack 101, as illustrated also in the perspective view of Fig. 2, where the rack 101 define a substantially cubed-formed shape with side-walls (denoted by 104) at the periphery 104. It is conceivable however that the rack 101 may have a variety of shapes, and define a periphery 104 for each of such variety of shapes. The temperature treatment medium is schematically indicated by dashed lines 114, e.g. in Fig. 1, thus propagating through the rack 101 and through the stack of packaging containers when arranged in the rack 101. Having an outlet 102 for a temperature treatment medium adjacent a center position 103 of the rack 103 provides for an even distribution of the temperature treatment medium in the rack 101, so that the packaging containers may receive a uniform exposure to the medium throughout the rack 101, from the center 103 and towards the periphery 104. The risk of uneven exposure can thus be minimized and the time for the treatment may also be reduced while maintaining the necessary amount of contact between the temperature treatment medium and the packaging containers. Having the outlet 102 arranged adjacent the center position 103 thus allows for the temperature treatment medium to propagate towards the periphery 104 already at the onset of the treatment process, and in a uniform substantially symmetric distribution along a path towards the periphery 104, as opposed to having a medium that must propagate from outside the periphery 104 to find a path towards the center position 103, at the cost of a lengthier and/or less even exposure of the package containers to the medium. Hence, it is provided for assuring an increased quality of the temperature treatment procedure even at higher throughput rates. The improved distribution of the medium throughout the rack 101 by having the outlet 102 adjacent the center 103 also allows the packaging containers to be arranged more densely while achieving and maintaining an even exposure throughout the rack 101.

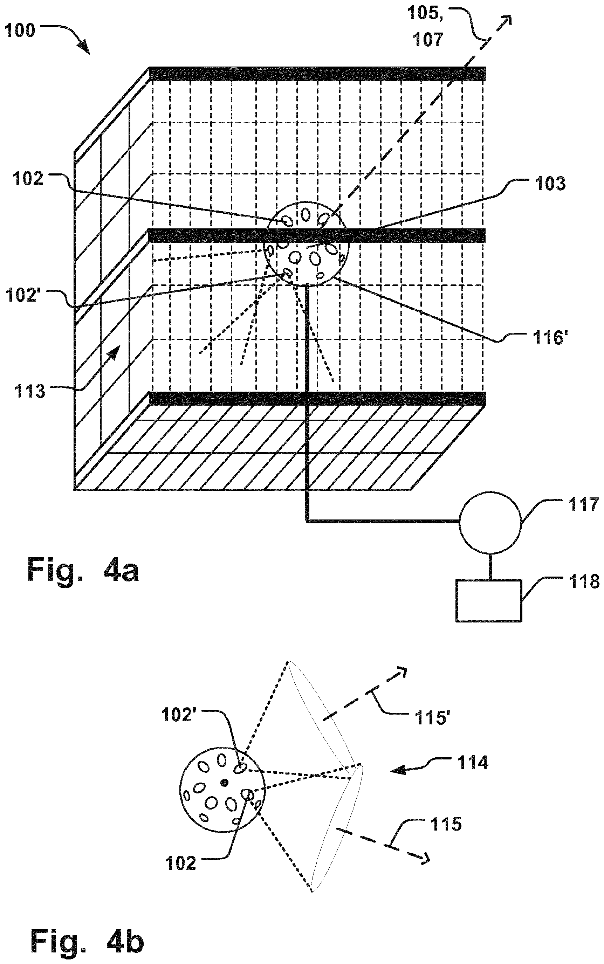

Fig. 1 illustrates an example where the outlet 102 comprises a plurality of outlets e.g. as denoted by first and second outlets 102, 102'. Any plurality of outlets 102 may be arranged adjacent the center 103 of the rack 101 as further illustrated in Fig. 1. Thus, a plurality of such outlets may be arranged to expel a temperature treatment medium in a plurality of directions from the center 103 towards the periphery 104. This may provide for achieving a further improved distribution of the medium throughout all directions in the rack 101. The outlets 102, 102', may be arranged so that the space occupied by an ejected volume of temperature treatment medium from a first outlet 102 overlaps with the corresponding space of ejected volume of medium from an adjacent second 102' outlet. This is schematically illustrated in Fig. 4b, where a volume 114 of medium is expelled in two directions 115, 115', from respective two outlets 102, 102', with an overlap so that the amount of "blind-spots" not exposed to the medium is minimized throughout the volume of the rack 101.

As mentioned, the outlet 102 may be arranged adjacent the center position 103, and also at the center position 103, or substantially at the center position 103. Any distance between the outlet 102 and the center position 103 may be chosen so that an even exposure of the packaging containers to the medium is achieved with the advantageous effects as described above.

The rack 101 may be rotatable around a rotational axis 105 arranged approximately at the center position 103. Rotation or other agitation of the retort 100 to move the head-space inside the packages, to achieve stirring of the product inside, is advantageous for some food products in order to shorten the process time and increase food quality. Having the outlet 102 adjacent the center position 103 of the rack 101 provides achieving an even and efficient distribution of temperature treatment medium throughout the rack 101 in such cases, since the propagation can be emphasized by centrifugal forces of such agitation. Problems associated with exposing the medium to counteracting forces can thus be prevented, which otherwise makes it difficult for the medium to reach the volume in which the packages are situated. Thus, the forces directed towards the periphery 104 during agitation may instead be utilized to magnify an efficient distribution from the outlet 102 and shorten the process time further, with associated increases of the propagation speed of the medium, rather than the opposite, as the agitation is intensified to achieve advantageous effects in some applications. The temperature treatment medium, such as water, steam or air (cooling or heating) may thus be efficiently transported through the layers of the package containers in the rack 101 by centrifugal forces.

Hence, the outlet 102 may be arranged such that the temperature treatment medium can propagate from the center position 103, or from a position adjacent the center position 103, towards the periphery 104 by centrifugal forces as the rack 101 rotates around the rotational axis 105. The rack 101 may be arranged to rotate or pivot in any direction, and the outlet 102 may be arranged so that medium can be expelled in the direction in which the corresponding centrifugal force is directed. Although reference is made to outlet 102, it should be construed as encompassing any plurality of outlets 102, 102', through the disclosure. A plurality of outlets 102, 102', may thus be arranged to provide for a distribution of medium 114 towards all directions of the periphery 104 as the rack 101 is rotated or otherwise agitated.

The outlet 102 may be omnidirectional for a circumferential and/or spherical distribution of temperature treatment medium through the rack 101 and towards the periphery 104. This provides for achieving an efficient distribution of medium. Fig. 1 illustrates an example of circumferential distribution of medium, and Fig. 4a illustrates an example, in a perspective-view, where the outlet 102 is configured for a spherical distribution from the center 103. In the latter case, the outlet comprises a plurality of outlets 102, 102', arranged to cover angles of a spherical space in the rack 101. The angles may be chosen so that the space covered by the medium 114 expelled from different outlets 102, 102', overlap, as illustrated in Fig. 4b. In this case, the outlets 102, 102', may be arranged in a spherical configuration at a center 103 of the volume of the rack 103.

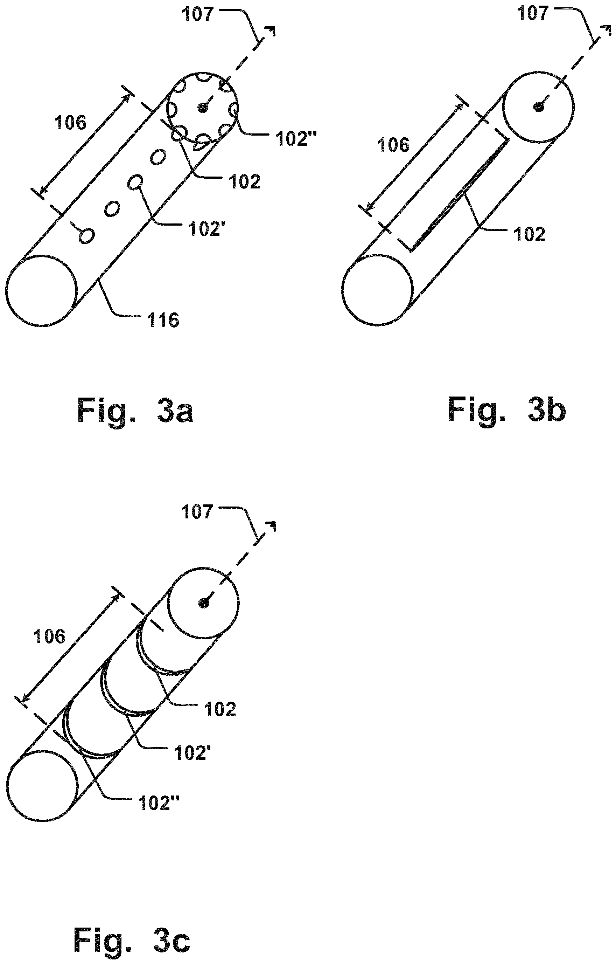

The outlet 102 may extend along an outlet length 106 in a longitudinal direction 107 through, or adjacent, the center position 103. The temperature treatment medium 114 may propagate from a position along the outlet length 106 towards the periphery 104 of the rack 101. Fig. 2 illustrates an example where an outlet length 106 extends in the longitudinal direction 107. The outlet 102 may comprise a plurality of outlets 102, 102', extending along the outlet length 106, as illustrated in Fig. 2 or Figs. 3a, 3c, and/or the outlet 102 may have an elongate extension as illustrated in Fig. 3b arranged with an outlet length 106. Having the outlet 102, 102', extending along an outlet length 106 through, or adjacent, the center position 103 provides for further ensuring that the medium may propagate evenly through the layers of the rack 101 along the longitudinal length 107. Fig. 3a illustrates an example of having arranged a plurality of outlets 102, 102', along a length 106 of an elongated or cylindrical outlet element 116. It is conceivable however that any plurality of outlets 102, 102', may be arranged across the surface of the outlet element 116 in order to optimize the distribution of medium depending on the application. Alternatively, or in combination, an elongate outlet 102 as exemplified in Fig. 3b may be arranged along the length 106. Any plurality of elongated outlets 102 may be provided around the circumference of the outlet element 116, which may have varying shapes, such as spherical 116' (as illustrated in Figs. 4a-b). The elongated outlets 102, 102', may be arranged around a circumference, perpendicular to the longitudinal direction as shown in Fig. 3c.

The outlet length 106 may correspond substantially to a length 108 (Fig. 2) of the rack 101 in a direction parallel with the outlet length 106. The outlet 102, 102', may thus extend through substantially the length/height of the rack 101 to further minimize the risk of having layers of stacked packaging containers along the length 108 not exposed to the temperature treatment medium. In one example the outlet length 106 is substantially a length of a plurality of racks 101.

The longitudinal direction 107 of the outlet length 106 may be parallel with the rotational axis 105. This provides for maximizing the advantage of utilizing any centrifugal forces along the outlet length 106, further facilitating the propagation of the medium from the outlets 102, 102', to the periphery 104.

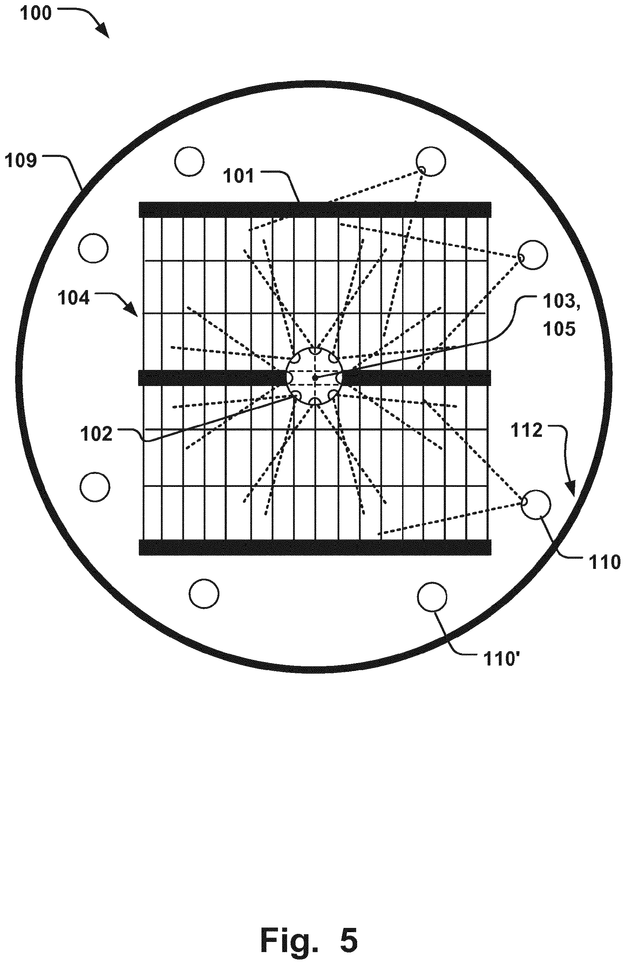

The retort 100 may comprise a rotatable drum 109 into which the rack 101 is arranged, as schematically illustrated in Figs. 1, 5 - 7. A secondary outlet 110 for a temperature treatment medium may be arranged between the rack 101 and the drum 109 adjacent a perimeter 112 of the drum 109, as illustrated in Fig. 5. The secondary outlet 110 may thus be arranged towards the rack 101, in an opposite direction compared to the above described outlet 102, so that the medium may be expelled towards the rack 101 and the package containers therein from two opposite directions, to further enhance the temperature treatment procedure. The secondary outlet 110 may comprise a plurality of secondary outlets 110, 110'. Fig. 5 illustrates an example where several secondary outlets 110 are arranged around the perimeter 112 of the drum 109, to provide for a further improved and even distribution of medium towards the rack 101.

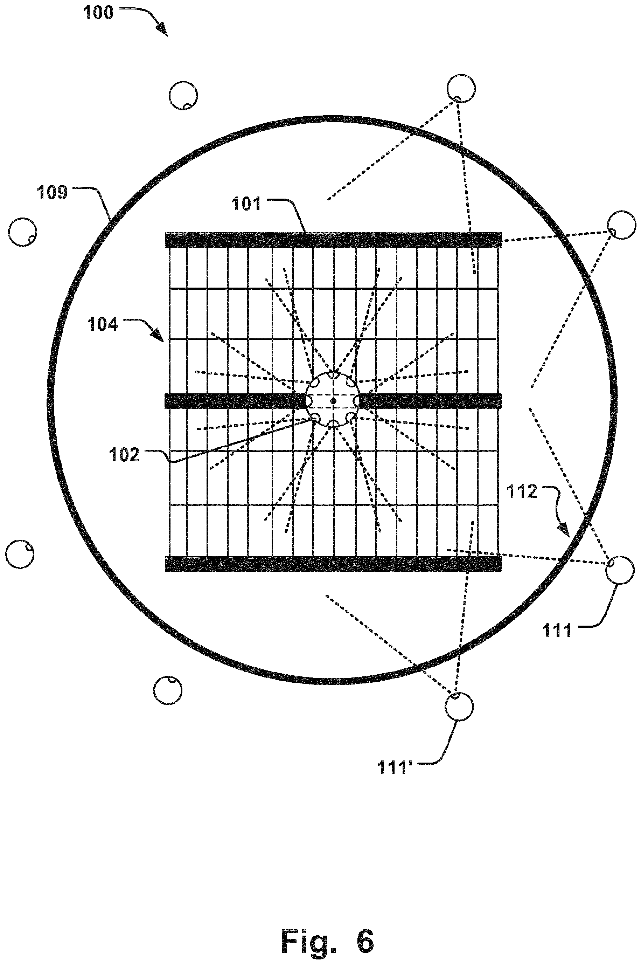

Moreover, a third outlet 111 for a temperature treatment medium may be arranged outside the perimeter 112 of the drum 109, as illustrated in the example of Fig. 6, which may provide for a particularly advantageous temperature treatment in some applications. As with the secondary outlet 110, the third outlet 111 may comprise a plurality of third outlets 111, 111', arranged around the perimeter 112, but outside the latter with respect to the center position 103.

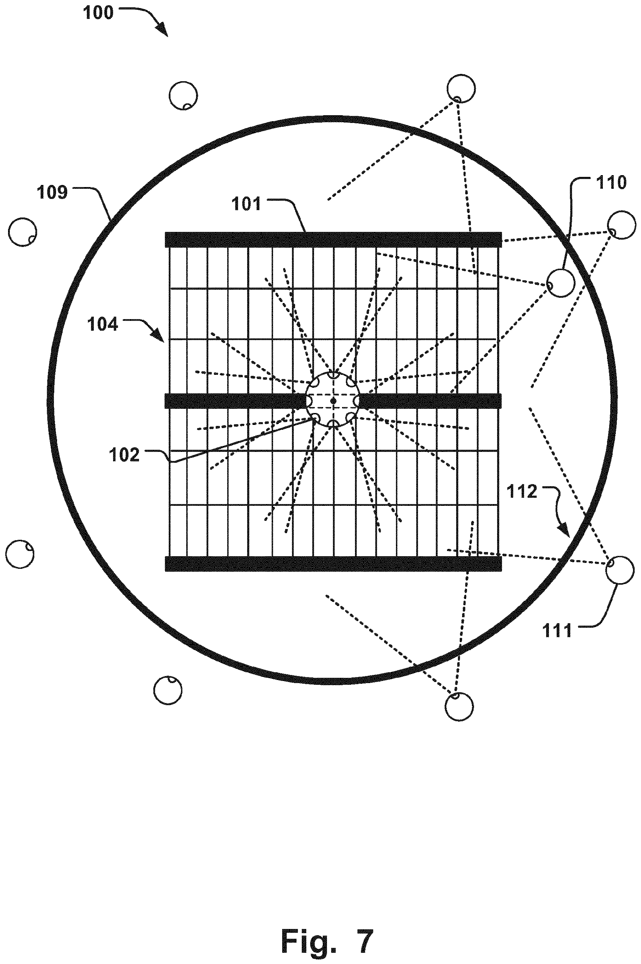

The retort 100 may comprise both a second 110 and a third outlet 111 arranged inside and outside of the perimeter 112, respectively, as illustrated in the example of Fig. 7 for optimization of the temperature treatment in some applications. A plurality of second and third outlets 110, 110', 111, 111', may be provided around the perimeter 112, at opposite sides thereof.

The rack may 101 comprise channels 113 through which the temperature treatment medium can propagate evenly through the rack 101 from the center position 103 to the periphery 104. The medium may thus propagate effectively between the package containers throughout the rack 101.

The medium may be provided from a pressurized source 117 which is in communication with a control unit 118, as schematically illustrated in Fig. 4a. The control unit 118 may be configured to regulate the amount of temperature treatment medium expelled from the outlet 102 in order to provide for an even and optimized flow rate thereof. The control unit 118 may also be in communication with sensors such as temperature and/or pressure sensors arranged in or adjacent the rack 101 in order to receive sensor data and control the temperature and/or pressure of the medium expelled from the outlet 102 to achieve a desired temperature treatment.

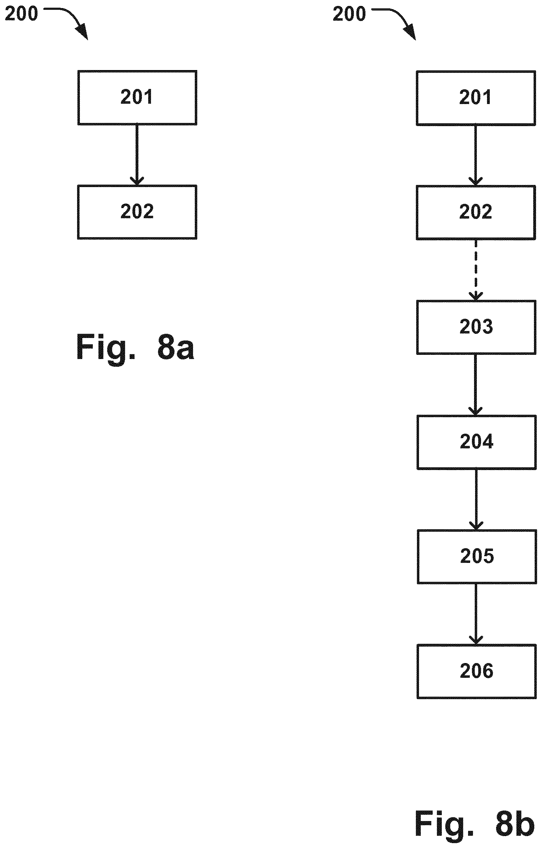

Fig. 8a illustrates a flow chart of a method 200 for temperature treatment of packaging containers stacked in a rack 101. The order in which the steps of the method 200 are described and illustrated should not be construed as limiting and it is conceivable that the steps can be performed in varying order. A method 200 is thus provided. The method 200 comprises expelling 201 a temperature treatment medium from an outlet 102 arranged adjacent a center position 103 of the rack for propagating 202 the temperature treatment medium from the outlet 102 towards a periphery 104 of the rack 101. The method 200 thus provides for the advantageous benefits as described above in relation to the retort 100 and Figs. 1 - 7.

Fig. 8b illustrates another flow chart of a method 200 for temperature treatment of packaging containers stacked in a rack 101. The order in which the steps of the method 200 are described and illustrated should not be construed as limiting and it is conceivable that the steps can be performed in varying order. The method 200 may comprise rotating 203 the rack around a rotational axis 105 arranged approximately at the center position 103, as discussed above.

Further, the method 200 may comprise expelling 204 a temperature treatment medium from a secondary outlet 110, 110', arranged between the rack 101 and a rotatable drum 109 in which the rack 101 is arranged and adjacent a perimeter 112 of the drum 109.

The method 200 may comprise expelling 205 a temperature treatment medium from a third outlet 111, 111', arranged outside a perimeter 112 of a rotatable drum 109 in which the rack 101 is arranged.

The method 200 may comprise expelling 206 a temperature treatment medium from the second 110, 110', and the third outlet 111, 111', arranged inside and outside of the perimeter 112, respectively.

The temperature treatment medium may comprise water, steam or air.

## Claims

1. A retort (100) for temperature treatment of packaging containers, the retort comprises
a rack (101) configured for receiving packaging containers for a stacked arrangement thereof,
an outlet (102) for a temperature treatment medium, wherein the outlet is arranged adjacent a center position (103) of the rack whereby the temperature treatment medium can propagate from the outlet towards a periphery (104) of the rack, **characterized in that**
the outlet is omnidirectional for a circumferential and/or spherical distribution of temperature treatment medium through the rack and towards the periphery.

2. Retort according to claim 1, wherein the rack is rotatable around a rotational axis (105) arranged approximately at the center position.

3. Retort according to claim 2, wherein the outlet is arranged such that the temperature treatment medium can propagate from the center position towards the periphery by centrifugal forces as the rack rotates around the rotational axis.

4. Retort according to any of claims 1 - 3, wherein the outlet extends along an outlet length (106) in a longitudinal direction (107) through the center position, whereby the temperature treatment medium can propagate from a position along the outlet length towards the periphery of the rack.

5. Retort according to claim 4, wherein the outlet length corresponds substantially to a length (108) of the rack in a direction parallel with the outlet length.

6. Retort according to claim 2 and 5, wherein the longitudinal direction of the outlet length is parallel with the rotational axis.

7. Retort according to any of claims 1 - 6, comprising
a rotatable drum (109) into which the rack is arranged, and
a secondary outlet (110) for a temperature treatment medium arranged between the rack and the drum adjacent a perimeter (112) of the drum.

8. Retort according to any of claims 1 - 6, comprising
a rotatable drum (109) into which the rack is arranged, and
a third outlet (111) for a temperature treatment medium arranged outside a perimeter (112) of the drum.

9. Retort according to claims 7 and 8, wherein the second and third outlet is arranged inside and outside of the perimeter, respectively.

10. Retort according to any of claims 1 - 9, wherein the rack comprises channels (113) through which the temperature treatment medium can propagate evenly through the rack from the center position to the periphery.

11. A method (200) for temperature treatment of packaging containers stacked in a rack (101), the method comprising;
expelling (201) a temperature treatment medium from an outlet (102) arranged adjacent a center position (103) of the rack for propagating (202) the temperature treatment medium from the outlet towards a periphery (104) of the rack, **characterized in that**
the outlet is omnidirectional for a circumferential and/or spherical distribution of temperature treatment medium through the rack and towards the periphery.

12. Method according to claim 11, comprising
rotating (203) the rack around a rotational axis (105) arranged approximately at the center position.

13. Method according to claim 11 or 12, comprising
expelling (204) a temperature treatment medium from a secondary outlet (110) arranged between the rack and a rotatable drum (109) in which the rack is arranged and adjacent a perimeter (112) of the drum.

14. Method according to claim 11 or 12, comprising
expelling (205) a temperature treatment medium from a third outlet (111) arranged outside a perimeter (112) of a rotatable drum (109) in which the rack is arranged.

15. Method according to claims 13 and 14, comprising
expelling (206) a temperature treatment medium from the second and third outlet arranged inside and outside of the perimeter, respectively.

16. Method according to any of claims 11 - 15, wherein the temperature treatment medium comprises water, steam or air.

## Patentansprüche

1. Retorte (100) für eine Temperaturbehandlung von Verpackungsbehältern, wobei die Retorte umfasst
ein Gestell (101), das ausgestaltet ist, Verpackungsbehälter für eine gestapelte Anordnung davon aufzunehmen,
einen Auslass (102) für ein Temperaturbehandlungsmedium, wobei der Auslass angrenzend an eine Mittelposition (103) des Gestells angeordnet ist, wobei sich das Temperaturbehandlungsmedium von dem Auslass hin zu einem Rand (104) des Gestells ausbreiten kann, **dadurch gekennzeichnet, dass**
der Auslass omnidirektional für eine umlaufende und/oder sphärische Verteilung von Temperaturbehandlungsmedium durch das Gestell und hin zu dem Rand ist.

2. Retorte nach Anspruch 1, wobei das Gestell um eine Drehachse (105) drehbar ist, die ungefähr an der Mittelposition angeordnet ist.

3. Retorte nach Anspruch 2, wobei der Auslass derart angeordnet ist, dass sich das Temperaturbehandlungsmedium von der Mittelposition hin zu dem Rand durch zentrifugale Kräfte ausbreiten kann, während sich das Gestell um die Drehachse dreht.

4. Retorte nach einem der Ansprüche 1-3, wobei sich der Auslass entlang einer Auslasslänge (106) in einer Längsrichtung (107) durch die Mittelposition erstreckt, wodurch sich das Temperaturbehandlungsmedium von einer Position entlang der Auslasslänge hin zu dem Rand des Gestells ausbreiten kann.

5. Retorte nach Anspruch 4, wobei die Auslasslänge im Wesentlichen einer Länge (108) des Gestells in einer Richtung parallel zu der Auslasslänge entspricht.

6. Retorte nach Anspruch 2 und 5, wobei die Längsrichtung der Auslasslänge parallel zu der Drehachse ist.

7. Retorte nach einem der Ansprüche 1-6, umfassend
eine drehbare Trommel (109), in der das Gestell angeordnet ist, und
einen zweiten Auslass (110) für ein Temperaturbehandlungsmedium, der zwischen dem Gestell und der Trommel angrenzend an einen Umfang (112) der Trommel angeordnet ist.

8. Retorte nach einem der Ansprüche 1-6, umfassend
eine drehbare Trommel (109), in der das Gestell angeordnet ist, und
einen dritten Auslass (111) für ein Temperaturbehandlungsmedium, der außerhalb eines Umfangs (112) der Trommel angeordnet ist.

9. Retorte nach den Ansprüchen 7 und 8, wobei der zweite und dritte Auslass innerhalb bzw. außerhalb des Umfangs angeordnet ist.

10. Retorte nach einem der Ansprüche 1-9, wobei das Gestell Kanäle (113) umfasst, durch die sich das Temperaturbehandlungsmedium gleichmäßig durch das Gestell von der Mittelposition zu dem Rand ausbreiten kann.

11. Verfahren (200) für eine Temperaturbehandlung von Verpackungsbehältern, die in einem Gestell (101) gestapelt sind, wobei das Verfahren umfasst:
Ausstoßen (201) eines Temperaturbehandlungsmediums aus einem Auslass (102), der angrenzend an eine Mittelposition (103) des Gestells angeordnet ist, zum Ausbreiten (202) des Temperaturbehandlungsmediums von dem Auslass hin zu einem Rand (104) des Gestells, **dadurch gekennzeichnet, dass**
der Auslass omnidirektional für eine umlaufende und/oder sphärische Verteilung von Temperaturbehandlungsmedium durch das Gestell und hin zu dem Rand ist.

12. Verfahren nach Anspruch 11, umfassend
Drehen (203) des Gestells um eine Drehachse (105), die ungefähr an der Mittelposition angeordnet ist.

13. Verfahren nach Anspruch 11 oder 12, umfassend
Ausstoßen (204) eines Temperaturbehandlungsmediums aus einem zweiten Auslass (110), der zwischen dem Gestell und einer drehbaren Trommel (109), in der das Gestell angeordnet ist, und angrenzend an einen Umfang (112) der Trommel angeordnet ist.

14. Verfahren nach Anspruch 11 oder 12, umfassend
Ausstoßen (205) eines Temperaturbehandlungsmediums aus einem dritten Auslass (111), der außerhalb eines Umfangs (112) einer drehbaren Trommel (109) angeordnet ist, in der das Gestell angeordnet ist.

15. Verfahren nach den Ansprüchen 13 und 14, umfassend
Ausstoßen (206) eines Temperaturbehandlungsmediums aus dem zweiten und dritten Auslass, die innerhalb bzw. außerhalb des Umfangs angeordnet sind.

16. Verfahren nach einem der Ansprüche 11-15, wobei das Temperaturbehandlungsmedium Wasser, Dampf oder Luft umfasst.

## Revendications

1. Autoclave (100) pour le traitement thermique de récipients d'emballage, l'autoclave comprenant
un casier (101) configuré pour recevoir des récipients d'emballage pour un agencement empilé de ceux-ci,
une sortie (102) pour un milieu de traitement thermique, la sortie étant disposée au voisinage d'une position centrale (103) du casier, le milieu de traitement thermique pouvant ainsi se propager depuis la sortie vers une périphérie (104) du casier, **caractérisé en ce que**
la sortie est omnidirectionnelle pour une distribution circonférentielle et/ou sphérique de milieu de traitement thermique à travers le casier et vers la périphérie.

2. Autoclave selon la revendication 1, dans lequel le casier est rotatif autour d'un axe de rotation (105) disposé approximativement à la position centrale.

3. Autoclave selon la revendication 2, dans lequel la sortie est disposée de telle sorte que le milieu de traitement thermique peut se propager depuis la position centrale vers la périphérie par des forces centrifuges lorsque le casier tourne autour de l'axe de rotation.

4. Autoclave selon l'une quelconque des revendications 1 à 3, dans lequel la sortie s'étend le long d'une longueur de sortie (106) dans une direction longitudinale (107) passant par la position centrale, le milieu de traitement thermique pouvant ainsi se propager depuis une position le long de la longueur de sortie vers la périphérie du casier.

5. Autoclave selon la revendication 4, dans lequel la longueur de sortie correspond sensiblement à une longueur (108) du casier dans une direction parallèle à la longueur de sortie.

6. Autoclave selon les revendications 2 et 5, dans lequel la direction longitudinale de la longueur de sortie est parallèle à l'axe de rotation.

7. Autoclave selon l'une quelconque des revendications 1 à 6, comprenant
un tambour rotatif (109) dans lequel est disposé le casier, et
une sortie secondaire (110) pour un milieu de traitement thermique, disposée entre le casier et le tambour au voisinage d'un périmètre (112) du tambour.

8. Autoclave selon l'une quelconque des revendications 1 à 6, comprenant
un tambour rotatif (109) dans lequel est disposé le casier, et
une troisième sortie (111) pour un milieu de traitement thermique, disposée à l'extérieur d'un périmètre (112) du tambour.

9. Autoclave selon les revendications 7 et 8, dans lequel la deuxième et la troisième sortie sont respectivement disposées à l'intérieur et à l'extérieur du périmètre.

10. Autoclave selon l'une quelconque des revendications 1 à 9, dans lequel le casier comprend des canaux (113) à travers lesquels le milieu de traitement thermique peut se propager uniformément à travers le casier depuis la position centrale jusqu'à la périphérie.

11. Procédé (200) de traitement thermique de récipients d'emballage empilés dans un casier (101), le procédé comprenant :
l'expulsion (201) d'un milieu de traitement thermique depuis une sortie (102) disposée au voisinage d'une position centrale (103) du casier pour propagation (202) du milieu de traitement thermique depuis la sortie vers une périphérie (104) du casier, **caractérisé en ce que**
la sortie est omnidirectionnelle pour une distribution circonférentielle et/ou sphérique de milieu de traitement thermique à travers le casier et vers la périphérie.

12. Procédé selon la revendication 11, comprenant
la rotation (203) du casier autour d'un axe de rotation (105) disposé approximativement à la position centrale.

13. Procédé selon la revendication 11 ou 12, comprenant
l'expulsion (204) d'un milieu de traitement thermique depuis une sortie secondaire (110) disposée entre le casier et un tambour rotatif (109) dans lequel est disposé le casier et au voisinage d'un périmètre (112) du tambour.

14. Procédé selon la revendication 11 ou 12, comprenant
l'expulsion (205) d'un milieu de traitement thermique depuis une troisième sortie (111) disposée à l'extérieur d'un périmètre (112) d'un tambour rotatif (109) dans lequel est disposé le casier.

15. Procédé selon les revendications 13 et 14, comprenant
l'expulsion (206) d'un milieu de traitement thermique depuis la deuxième et la troisième sortie respectivement disposées à l'intérieur et à l'extérieur du périmètre.

16. Procédé selon l'une quelconque des revendications 11 à 15, dans lequel le milieu de traitement thermique comprend de l'eau, de la vapeur d'eau ou de l'air.
